# FASCICULE DE BREVET EUROPEEN

(11) **EP 3 898 278 B1**
(45) Date de publication et mention de la délivrance du brevet: **19.10.2022**
(21) Numéro de dépôt: 19839388.6
(22) Date de dépôt: 11.12.2019
(51) Int. Cl.: B60C 9/20, B60C 9/00, B60C 11/03

(54) **PNEUMATIQUE POUR VEHICULE COMPRENANT UNE STRUCTURE DE RIGIDIFICATION**
FAHRZEUGREIFEN MIT EINER VERSTEIFUNGSSTRUKTUR
VEHICLE TYRE COMPRISING A STIFFENING STRUCTURE

(30) Priorité: 19.12.2018 FR 1873322; 04.02.2019 FR 1901038
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: PERRIN, Frédéric, 63040 CLERMONT-FERRAND Cedex 9 (FR); LACHAL, Florian, 63040 CLERMONT-FERRAND Cedex 9 (FR); PATAUT, Gaël, 63040 CLERMONT-FERRAND Cedex 9 (FR); CORNILLE, Richard, 63040 CLERMONT-FERRAND Cedex 9 (FR); REIX, Olivier, 63040 CLERMONT-FERRAND Cedex 9 (FR)
(74) Mandataire: Millanvois, Patrick Jacques Jean
(86) Numéro de dépôt international: PCT/FR2019/053022
(87) Numéro de publication internationale: WO 2020/128236

(56) Documents cités:
- EP-A1- 2 218 588
- EP-A1- 2 641 751
- EP-A1- 2 934 917
- JP-A- H09 226 318
- US-A1- 2016 152 082

## Description

La présente invention a pour objet un pneumatique pour véhicule agricole, tel qu'un tracteur agricole ou un véhicule agro-industriel, et concerne plus particulièrement son armature de sommet.

Les spécifications dimensionnelles et les conditions d'usage (charge, vitesse, pression) d'un pneumatique pour véhicule agricole sont définies dans des normes, telles que, par exemple, la norme ETRTO (European Tyre and Rim Technical Organisation). A titre d'exemple, un pneumatique radial pour roue motrice d'un tracteur agricole est destiné à être monté sur une jante dont le diamètre est généralement compris entre 16 pouces et 46 pouces, voire 54 pouces. Il est destiné à rouler sur un tracteur agricole dont la puissance est comprise entre 50 CV et plus de 250 CV (jusqu'à 550 CV) et pouvant rouler jusqu'à 65 km/h. Pour ce type de pneumatique, la pression de gonflage minimale recommandée correspondant à la capacité de charge indiquée est le plus souvent au plus égale à 400 kPa, mais peut descendre jusqu'à 240 kPa, pour un pneumatique IF (Improved Flexion), voire 160 kPa, pour un pneumatique VF (Very High Flexion).

Comme tout pneumatique, un pneumatique pour véhicule agricole comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Dans ce qui suit, les directions circonférentielle, axiale et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique.

Un pneumatique radial pour véhicule agricole comprend une armature de renforcement, constituée d'une armature de sommet, radialement intérieure à la bande de roulement, et d'une armature de carcasse, radialement intérieure à l'armature de sommet.

La bande de roulement d'un pneumatique pour véhicule agricole comprend généralement une pluralité d'éléments en relief, appelés éléments de sculpture, s'étendant radialement vers l'extérieur à partir d'une surface portante jusqu'à la surface de roulement, et le plus souvent séparés les uns des autres par des creux ou sillons. Ces éléments de sculpture sont le plus souvent des barrettes ayant généralement une forme allongée globalement parallélépipédique, comprenant au moins une portion rectiligne ou curviligne.

L'armature de carcasse d'un pneumatique radial pour véhicule agricole comprend au moins une couche de carcasse reliant les deux bourrelets entre eux. Une couche de carcasse comprend des renforts enrobés par un matériau polymérique comprenant un élastomère, obtenu par mélangeage, ou mélange élastomérique. Les renforts de couche de carcasse sont le plus souvent constitués par des matériaux polymériques textiles, tels qu'un polyester, par exemple un polyéthylène téréphtalate (PET), un polyamide aliphatique, par exemple un nylon, un polyamide aromatique, par exemple l'aramide, ou encore la rayonne. Les renforts d'une couche de carcasse sont sensiblement parallèles entre eux et forment, avec la direction circonférentielle, un angle compris entre 85° et 95°.

L'armature de sommet d'un pneumatique radial pour véhicule agricole comprend une superposition de couches de sommet s'étendant circonférentiellement, radialement à l'extérieur de l'armature de carcasse. Chaque couche de sommet est constituée de renforts enrobés par un mélange élastomérique et parallèles entre eux. Lorsque les renforts de couche de sommet forment, avec la direction circonférentielle, un angle au plus égal à 10°, ils sont dits circonférentiels, ou sensiblement circonférentiels, et assurent une fonction de frettage limitant les déformations radiales du pneumatique. Lorsque les renforts de couche de sommet forment, avec la direction circonférentielle, un angle au moins égal à 10° et le plus souvent au plus égal à 40°, ils sont appelés renforts à angle et ont une fonction de reprise des efforts transversaux, parallèles à la direction axiale, appliqués au pneumatique. Les renforts de couche de sommet peuvent être constitués par des matériaux polymériques textiles, tels qu'un polyester, par exemple un polyéthylène téréphtalate (PET), un polyamide aliphatique, par exemple un nylon, un polyamide aromatique, par exemple l'aramide, ou encore la rayonne, ou par des matériaux métalliques, tels que l'acier.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route.

Un problème essentiel pour l'utilisation d'un pneumatique en champ est de limiter au maximum la compaction du sol par le pneumatique, susceptible de nuire aux cultures. C'est la raison pour laquelle, dans le domaine agricole, des pneumatiques à basse pression, donc à forte flexion, ont été développés. La norme ETRTO distingue ainsi les pneumatiques IF (Improved Flexion), avec une pression de gonflage minimale recommandée généralement égale à 240 kPa, et les pneumatiques VF (Very high Flexion), avec une pression de gonflage minimale recommandée généralement égale à 160 kPa. Selon la norme, par rapport à un pneumatique standard, un pneumatique IF a une capacité de charge augmentée de 20%, et un pneumatique VF a une capacité de charge augmentée de 40%, pour une pression de gonflage égale à 160 kPa.

Toutefois l'utilisation de pneumatiques à basse pression a eu un impact négatif sur le comportement en champ. Ainsi la baisse de la pression de gonflage a entrainé une diminution des rigidités transversale et de dérive du pneumatique, d'où une diminution de la poussée transversale du pneumatique, et, par conséquent, une dégradation de son comportement sous sollicitations transversales. Une solution pour rétablir une poussée transversale correcte a été de rigidifier transversalement l'armature de sommet du pneumatique, en remplaçant les couches de sommet à renforts textiles par des couches de sommet à renforts métalliques. Ainsi, par exemple, une armature de sommet comprenant six couches de sommet à renforts textiles de type rayonne a été remplacée par une armature de sommet comprenant deux couches de sommet à renforts métalliques en acier.

Le document EP 2934917 décrit ainsi un pneumatique IF comprenant une armature de sommet comprenant au moins deux couches de sommet à renforts métalliques, combinée avec une armature de carcasse comprenant au moins deux couches de carcasse à renforts textiles.

Un autre pneu agricole est connu de EP 2 641 751 A1. Des câbles d'acier divers pour le renforcement des pneus sont connus de US 2016/152082 A1, EP 2 218 588 A1 et JP H09 226318 A.

Mais l'utilisation de couches de sommet à renforts métalliques, dans un pneumatique pour véhicule agricole, peut entrainer une diminution de l'endurance du sommet du pneumatique, du fait d'une rupture prématurée des renforts métalliques.

Les inventeurs se sont alors donnés pour objectif d'augmenter l'endurance d'une armature de sommet avec des renforts métalliques jusqu'à un niveau au moins équivalent à celle d'une armature de sommet avec des renforts textiles, en particulier pour un pneumatique pour véhicule agricole fonctionnant à basse pression tel qu'un pneumatique IF (Improved Flexion) ou un pneumatique VF (Very High Flexion).

Ce but a été atteint selon l'invention par un pneumatique pour véhicule agricole comprenant une armature de sommet, radialement intérieure à une bande de roulement et radialement extérieure à une armature de carcasse,
- l'armature de sommet comprenant au moins deux couches de sommet, comprenant chacune des renforts métalliques enrobés dans un matériau élastomérique, parallèles entre eux et formant, avec une direction circonférentielle, un angle A au moins égal à 10°,
- tout renfort métallique de couche de sommet ayant une loi de comportement élastique en extension, dite bi-module, comprenant une première portion ayant un premier module en extension MG1 au plus égal à 30 GPa, et une deuxième portion ayant un deuxième module en extension MG2 au moins égal à 2 fois le premier module en extension MG1, ladite loi de comportement en extension étant déterminée pour un renfort métallique enrobé dans un mélange élastomérique ayant un module d'élasticité en extension à 10% d'allongement MA10 au moins égal à 5 MPa et au plus égal à 15 MPa,
- et tout renfort métallique de couche de sommet ayant une loi de comportement en compression, caractérisée par une déformation critique de flambage en compression E0 au moins égal à 3%, ladite loi de comportement en compression étant déterminée sur une éprouvette constituée par un renfort placé en son centre et enrobé par un volume parallélépipédique de mélange élastomérique ayant un module d'élasticité en extension à 10% d'allongement MA10 au moins égal à 5 MPa et au plus égal à 15 MPa.

Pour un pneumatique pour véhicule agricole comprenant une armature de sommet à au moins deux couches de sommet avec des renforts métalliques, les inventeurs proposent d'utiliser des renforts métalliques élastiques dont les lois de comportement ont des caractéristiques spécifiques à la fois en extension et en compression.

En ce qui concerne son comportement en extension, un renfort métallique nu, c'est-à-dire non enrobé par un matériau élastomérique, est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en extension du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées, par exemple, selon la norme ISO 6892 de 1984 ou la norme ASTM D2969-04 de 2014.

L'allongement total à la rupture At d'un renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible du métal de ces fils métalliques pris individuellement, au-delà de la limite d'élasticité.

Dans le contexte de l'invention, la loi de comportement en extension d'un renfort métallique est déterminée pour un renfort métallique enrobé dans un matériau élastomérique cuit, correspondant à un renfort métallique extrait du pneumatique, sur la base de la norme ISO 6892 de 1984 comme pour un renfort métallique nu. A titre d'exemple, et de façon non exhaustive, un matériau élastomérique d'enrobage cuit est une composition à base de caoutchouc ayant un module d'élasticité en extension sécant à 10% d'allongement MA10 au moins égal à 5 MPa et au plus égal à 15 MPa, par exemple égal à 6 MPa. Ce module d'élasticité en extension est déterminé à partir d'essais de traction réalisés conformément à la norme française NF T 46-002 de septembre 1988.

A partir de la courbe force-allongement, pour une loi de comportement élastique bi-module comprenant une première portion et une deuxième portion, on peut définir une première rigidité en extension KG1, représentant la pente de la droite sécante passant par l'origine du repère, dans lequel est représentée la loi de comportement, et le point de transition entre les première et deuxième portions. De même, on peut définir une deuxième rigidité en extension KG2, représentant la pente d'une droite passant par deux points positionnés dans une partie sensiblement linéaire de la deuxième portion.

A partir de la courbe force-allongement, caractérisant le comportement en extension d'un renfort, on peut définir également une courbe contrainte-déformation, la contrainte étant égale au rapport entre la force de traction appliquée au renfort et la surface de la section du renfort, et la déformation étant l'allongement relatif du renfort. Pour une loi de comportement élastique bi-module comprenant une première portion et une deuxième portion, on peut définir un premier module en extension MG1, représentant la pente de la droite sécante passant par l'origine du repère, dans lequel est représentée la loi de comportement, et le point de transition entre les première et deuxième portions. De même, on peut définir un deuxième module en extension MG2, représentant la pente d'une droite passant par deux points positionnés dans une partie sensiblement linéaire de la deuxième portion. Les rigidités en extension KG1 et KG2 sont respectivement égales à MG1^{∗}S et MG2^{∗}S, S étant la surface de la section du renfort. Il est à noter que les lois de comportement bi-module entrant dans le cadre de l'invention comprennent une première portion à faible module et une deuxième portion à module élevé.

Selon l'invention, concernant le comportement en extension des renforts métalliques, tout renfort métallique de couche de sommet a une loi de comportement élastique en extension, dite bi-module, comprenant une première portion ayant un premier module en extension MG1 au plus égal à 30 GPa, et une deuxième portion ayant un deuxième module en extension MG2 au moins égal à 2 fois le premier module en extension MG1.

En ce qui concerne le comportement en compression, un renfort métallique est caractérisé mécaniquement par une courbe représentant la force de compression (en N), appliquée au renfort métallique, en fonction de sa déformation en compression (en %). Une telle courbe en compression est en particulier caractérisée par un point limite, défini par une force critique de flambage Fc et une déformation critique de flambage E0, au-delà duquel le renfort est soumis à un flambage en compression, correspondant à un état d'instabilité mécanique caractérisé par de grandes déformations du renfort avec une diminution de l'effort de compression.

La loi de comportement en compression est déterminée, à l'aide d'une machine de test de type Zwick ou Instron, sur une éprouvette de dimensions 12 mm × 21 mm × 8 mm (largeur × hauteur × épaisseur). L'éprouvette est constituée par un renfort, placé en son centre et enrobé par un volume parallélépipédique de mélange élastomérique définissant le volume de l'éprouvette, l'axe du renfort étant placé selon la hauteur de l'éprouvette. Dans le contexte de l'invention, le mélange élastomérique de l'éprouvette a un module d'élasticité en extension sécant à 10% d'allongement MA10 au moins égal à 5 MPa et au plus égal à 15 MPa, par exemple égal à 6 MPa. L'éprouvette est comprimée dans le sens de la hauteur. à une vitesse de 3 mm / min jusqu'à une déformation en compression, c'est-à-dire un écrasement de l'éprouvette égale à 10% de sa hauteur initiale, à température ambiante. La force critique de flambage Fc et la déformation critique de flambage E0 correspondante sont atteintes lorsque l'effort appliqué diminue alors que la déformation continue à augmenter. En d'autres termes la force critique de flambage Fc correspond à la force de compression maximale Fmax.

Selon l'invention, concernant le comportement en compression des renforts métalliques, tout renfort métallique de couche de sommet a une loi de comportement en compression, caractérisée par une déformation critique de flambage en compression E0 au moins égal à 3%.

Les inventeurs ont montré que des renforts métalliques dits élastiques, caractérisés par des lois de comportement en extension et en compression telles que précédemment décrites, ont une limite d'endurance en fatigue, lors de cycles répétés alternativement en extension et en compression, supérieure à celle des renforts métalliques usuels.

En effet, lors du roulage d'un pneumatique pour véhicule agricole comprenant une bande de roulement à barrettes, le basculement des barrettes sous couple (moteur ou freineur) entraine un basculement des couches de sommet, positionnées radialement à l'intérieur des barrettes. Ce basculement entraîne des courbures alternativement positives et négatives des couches de sommet, et corrélativement des cycles alternativement en compression/extension des renforts métalliques des couches de sommet.

Il est à noter également que les couches de sommet d'un pneumatique pour véhicule agricole présentent souvent des courbures initiales, à la fois selon la direction circonférentielle et selon la direction axiale, résultant des mouvements des divers constituants élastomériques et des renforts au cours de la fabrication, lors du moulage et de la cuisson du pneumatique. Ces déformations initiales s'ajoutent aux déformations résultant du basculement des barrettes et contribuent donc également aux cycles en compression/extension des renforts métalliques des couches de sommet, lors du roulage du pneumatique.

Ainsi des renforts métalliques élastiques de couches de sommet selon l'invention sont aptes à mieux supporter les cycles en compression/extension précédemment décrits, ce qui entraine une amélioration de l'endurance de l'armature de sommet du pneumatique, et donc une augmentation de la durée de vie du pneumatique.

Avantageusement, dans le cas où l'armature de sommet est constituée par deux couches de sommet, la masse linéique d'un renfort métallique de couche de sommet est au moins égale à 6 g/m et au plus égale à 13 g/m. La masse linéique d'un renfort métallique est la masse de métal d'une portion de renfort ayant une longueur unitaire égale à 1 m. La masse linéique est corrélée au module en extension du renfort, donc à sa rigidité. Par conséquent, cette plage de valeurs de masse linéique a été considérée optimale vis-à-vis de la rigidité de renfort visée. De façon plus générale, pour une armature de sommet constituée par 2n couches de sommet, la masse linéique des renforts constitutifs de chaque couche de sommet est avantageusement au moins égale à 6/n g/m et au plus égale à 13/n g/m.

Selon un mode de réalisation préféré des renforts métalliques, tout renfort métallique de couche de sommet est un câble multi-toron de structure 1×N comprenant une unique couche de N torons de diamètre DT enroulés en hélice ayant un angle AT et un rayon de courbure RT, chaque toron comprenant une couche interne de M fils internes enroulés en hélice et une couche externe de P fils externes enroulés en hélice autour de la couche interne. C'est un type de renfort métallique couramment utilisé dans le domaine pneumatique.

Le plus souvent tous les torons ont le même diamètre DT. Chaque toron est enroulé en hélice autour de l'axe du câble, cette hélice étant caractérisée par un pas d'hélice PT, un angle d'hélice AT et un rayon de courbure RT. Le pas d'hélice PT est la distance au bout de laquelle le toron a fait un tour d'hélice complet. Le rayon de courbure RT est calculé selon la relation RT=PT/ (π ^{∗} Sin (2^{∗}AT)).

Dans le cas particulier où les renforts métalliques de couche de sommet sont des câbles multi-torons, l'angle d'hélice AT d'un toron est avantageusement au moins égal à 20° et au plus égal à 30°. Cette plage de valeurs d'angle d'hélice AT d'un toron conditionne la géométrie du câble et, en particulier, la courbure des torons qui impacte le niveau de déformation critique de flambage en compression E0 et contribue à l'obtention d'une valeur au moins égale à 3%.

Toujours dans le cas particulier où les renforts métalliques de couche de sommet sont des câbles multi-torons, le rapport RT/DT entre le rayon de courbure d'hélice d'un toron RT et le diamètre d'un toron DT est également avantageusement au plus égal à 5. Cette valeur maximale du rapport RT/DT est un critère qui contribue également à un niveau de déformation critique de flambage en compression E0 au moins égal à 3%.

Dans le cas où l'armature de sommet est constituée par deux couches de sommet et où les renforts métalliques de couche de sommet sont des câbles multi-torons, le diamètre D d'un renfort métallique de couche de sommet est encore avantageusement au moins égal à 1.4 mm et au plus égal à 3 mm. Cette plage de valeurs de diamètre D est compatible avec la plage de valeurs visées pour la masse linéique de renfort. De tels renforts sont obtenus à partir d'assemblage de fils en acier ayant généralement un diamètre au plus égal à 0.35 mm, voire au plus égal à 0.28 mm.

Toujours dans le cas où l'armature de sommet est constituée par deux couches de sommet, la résistance à rupture R d'une couche de sommet est au moins égale à 500 N/mm et au plus égale à 1500 N/mm. La résistance à rupture R d'une couche de sommet est égale à la force à rupture unitaire, en N, d'un renfort métallique divisée par le pas, en mm, c'est-à-dire la distance entre deux renforts consécutifs. La résistance à rupture R conditionne, en particulier, la résistance à l'éclatement sous pression du pneumatique, avec un coefficient de sécurité donné.

Selon un mode de réalisation avantageux de l'armature de sommet, l'armature de sommet comprend au moins une couche de frettage comprenant des renforts enrobés dans un matériau élastomérique, parallèles entre eux et formant, avec la direction circonférentielle (XX'), un angle B au plus égal à 10°. Une couche de frettage a pour fonction de participer à la reprise des sollicitations mécaniques de gonflage et, également, à l'amélioration de l'endurance de l'armature de sommet par une rigidification de celle-ci, lorsque le pneumatique est écrasé sous une charge radiale et, en particulier, soumis à un angle de dérive autour de la direction radiale. Parmi les couches de frettage, on distingue les couches de frettage dites à angles fermés, c'est-à-dire dont les renforts forment, avec la direction circonférentielle, des angles au moins égaux à 5° et au plus égaux à 10°, et les couches de frettage circonférentielles, plus précisément sensiblement circonférentielles, c'est-à-dire dont les renforts forment, avec la direction circonférentielle, des angles au plus égaux à 5° et pouvant être nuls. Les couches de frettage à angles fermés comprennent des renforts ayant des extrémités libres au niveau des extrémités axiales des couches de frettage. Les couches de frettage circonférentielles comprennent des renforts n'ayant pas d'extrémités libres au niveau des extrémités axiales des couches de frettage, car les couches de frettage circonférentielles sont obtenues le plus souvent par l'enroulement circonférentiel d'une nappe de renforts ou par l'enroulement circonférentiel d'un renfort. Les renforts de couche de frettage peuvent être soit continus, soit fractionnés. Les renforts de couche de frettage peuvent être soit métalliques, soit textiles.

Selon un autre mode de réalisation avantageux de l'armature de sommet, l'armature de sommet comprend au moins une couche de sommet additionnelle comprenant des renforts métalliques enrobés dans un matériau élastomérique, parallèles entre eux et formant, avec la direction circonférentielle, un angle C au moins égal à 60° et au plus égal à 90°. Cette couche de sommet additionnelle comprend des renforts métalliques, non nécessairement élastiques et non nécessairement du type de ceux de l'invention et formant, par rapport à la direction circonférentielle, des angles compris entre 60° et 90°. Ces angles sont plus élevés que ceux formés par les renforts élastiques des couches de sommet selon l'invention, généralement compris entre 10° et 40°. Cette couche de sommet additionnelle, radialement positionnée soit à l'intérieur soit à l'extérieur des couches de sommet selon l'invention, et étant le plus souvent découplée desdites couches, c'est-à-dire séparée d'elles par une couche en mélange élastomérique, contribue à la rigidification de l'armature de sommet par un effet de frettage par triangulation avec les autres couches de sommet.

Le plus souvent l'armature de carcasse comprend au moins une couche de carcasse comprenant des renforts textiles enrobés dans un matériau élastomérique, parallèles entre eux et formant, avec la direction circonférentielle, un angle D au moins égal à 85° et au plus égal à 95°. Mais un angle D inférieur, typiquement au moins égal à 65°, est également envisageable.

Selon un mode de réalisation usuel de la bande de roulement, la bande de roulement est constituée d'une première et d'une seconde rangées de barrettes s'étendant radialement vers l'extérieur à partir d'une surface portante et disposées en chevrons par rapport au plan équatorial du pneumatique.

L'invention est applicable en particulier à un pneumatique radial pour roue motrice d'un tracteur agricole, et encore plus particulièrement à un pneumatique IF (Improved Flexion), avec une pression de gonflage minimale recommandée généralement égale à 240 kPa, et un pneumatique VF (Very High Flexion), avec une pression de gonflage minimale recommandée généralement égale à 160 kPa. Elle peut même être étendue à un pneumatique gonflé à une basse pression, telle que recommandée pour un pneumatique VF, mais ayant une capacité de charge supérieure à celle d'un pneumatique VF.

Les caractéristiques de l'invention sont illustrées par les figures 1 à 7 schématiques et non représentées à l'échelle:
- Figure 1 : Demi-coupe méridienne de pneumatique pour véhicule agricole selon l'invention
- Figure 2 : Exemple-type de courbe force de traction-allongement type d'un renfort métallique élastique selon l'invention, enrobé par un matériau élastomérique
- Figure 3 : Courbes contrainte de traction-allongement pour deux exemples particuliers de renfort métallique élastique selon l'invention (E12.23 et E24.26), enrobé par un matériau élastomérique
- Figure 4 : Exemple-type de courbe force de compression-déformation en compression d'un renfort métallique élastique selon l'invention, obtenu sur une éprouvette en matériau élastomérique
- Figures 5 et 6 : Formules d'assemblage de deux exemples particuliers de renfort métallique élastique selon l'invention (E18.23 et E24.26)
- Figure 7 : Vue de face d'un pneumatique pour véhicule agricole avec bande de roulement à barrettes.

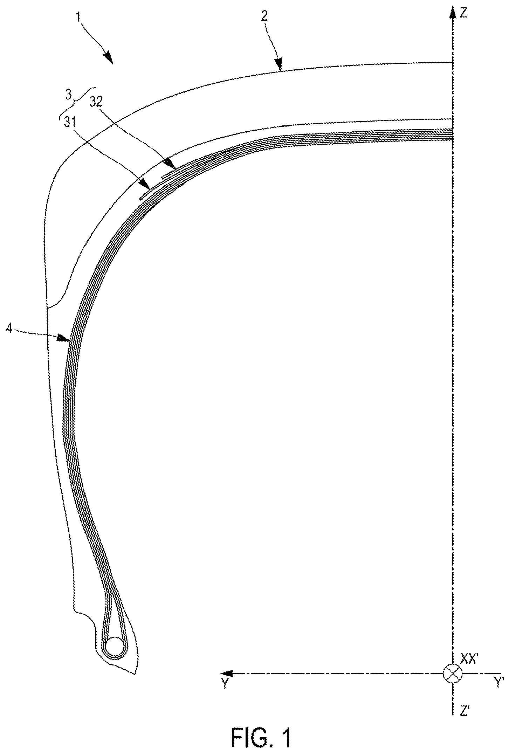

La figure 1 représente une demi-coupe méridienne, dans un plan méridien YZ passant par l'axe de rotation YY' du pneumatique, d'un pneumatique 1 pour véhicule agricole comprenant une armature de sommet 3 radialement intérieure à une bande de roulement 2 et radialement extérieure à une armature de carcasse 4. L'armature de sommet 3 comprend deux couches de sommet (31, 32), comprenant chacune des renforts métalliques enrobés dans un matériau élastomérique, parallèles entre eux et formant, avec une direction circonférentielle (XX'), un angle A au moins égal à 10° (non représenté). L'armature de sommet 4 comprend trois couches de carcasse comprenant des renforts textiles enrobés dans un matériau élastomérique, parallèles entre eux et formant, avec la direction circonférentielle (XX'), un angle D au moins égal à 85° et au plus égal à 95° (non représenté).

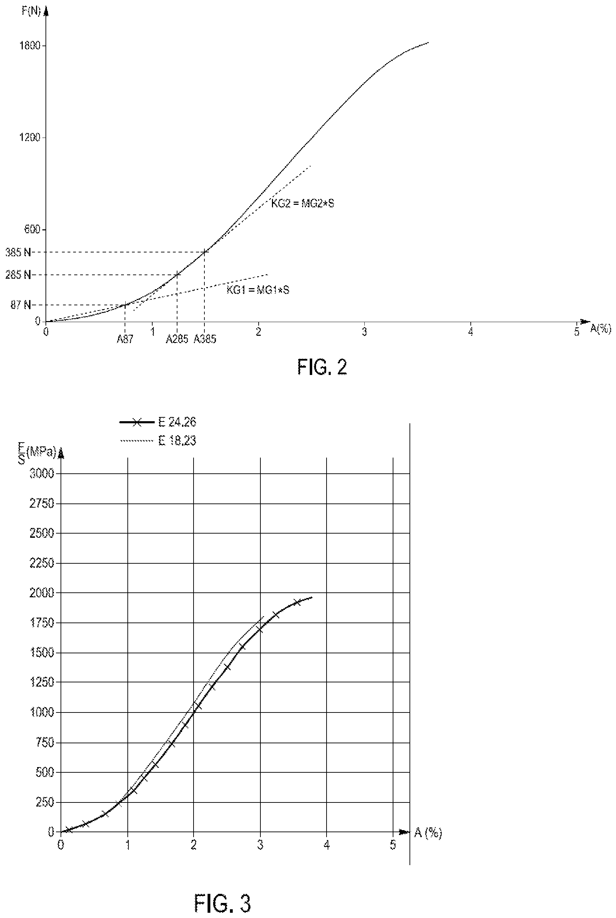

La figure 2 est un exemple-type de courbe force de traction-allongement relatif d'un renfort métallique élastique selon l'invention, enrobé par un matériau élastomérique, représentant son comportement élastique en extension. La force de traction F est exprimée en N et l'allongement A est un allongement relatif, exprimé en %. Selon l'invention, la loi de comportement en extension, élastique et bi-module, comprend une première portion et une deuxième portion. La première portion est délimitée par deux points dont les ordonnées correspondent respectivement à une force de traction nulle et une force de traction égale à 87 N, les abscisses respectives étant les allongements relatifs correspondants (en %). On peut définir une première rigidité en extension KG1, représentant la pente de la droite sécante passant par l'origine du repère, dans lequel est représentée la loi de comportement, et le point de transition entre les première et deuxième portions. Sachant que par définition, la rigidité en extension KG1 est égale au produit du module en extension MG1 par la surface S de la section du renfort, on peut en déduire aisément le module en extension MG1. La deuxième portion est l'ensemble des points correspondant à une force de traction supérieure à 87 N. De même, pour cette deuxième portion, on peut définir une deuxième rigidité en extension KG2, représentant la pente d'une droite passant par deux points positionnés dans une partie sensiblement linéaire de la deuxième portion. Dans l'exemple représenté, les deux points ont pour ordonnées respectives F = 285 N et F = 385 N, ces valeurs de force de traction correspondant à des niveaux de sollicitations mécaniques représentatifs de ceux qui sont appliqués aux renforts métalliques des couches de sommet, au cours du roulage du pneumatique étudié. Comme décrit précédemment KG2 = MG2^{∗}S, donc on peut en déduire le module en extension MG2.

La figure 3 représente deux courbes contrainte de traction-allongement, la contrainte de traction F/S, exprimée en MPa, étant égale au rapport entre la force de traction F, exprimée en N, appliquée au renfort, et la surface S de la section du renfort, exprimée en mm², et l'allongement A étant l'allongement relatif du renfort, exprimée en %. La surface S de la section du renfort est la section de métal égale à ML/p, ML étant la masse linéique du renfort, exprimée en g/m, et ρ étant la masse volumique constitutive du renfort, exprimée en g/cm3 (par exemple la masse volumique ρ de l'acier laitonné est égale à 7.77 g/cm³). Ces courbes sont les lois de comportement en extension respectives de deux exemples de renforts élastiques multi-torons E18.23 et E24.26 enrobés par un matériau élastomérique. De ces courbes, on peut déduire directement les premier et deuxième modules en extension MG1 et MG2. Selon l'invention, pour chacune des lois de comportement représentées, le premier module en extension MG1 est au plus égal à 30 GPa, et le deuxième module en extension MG2 est au moins égal à 2 fois le premier module en extension MG1.

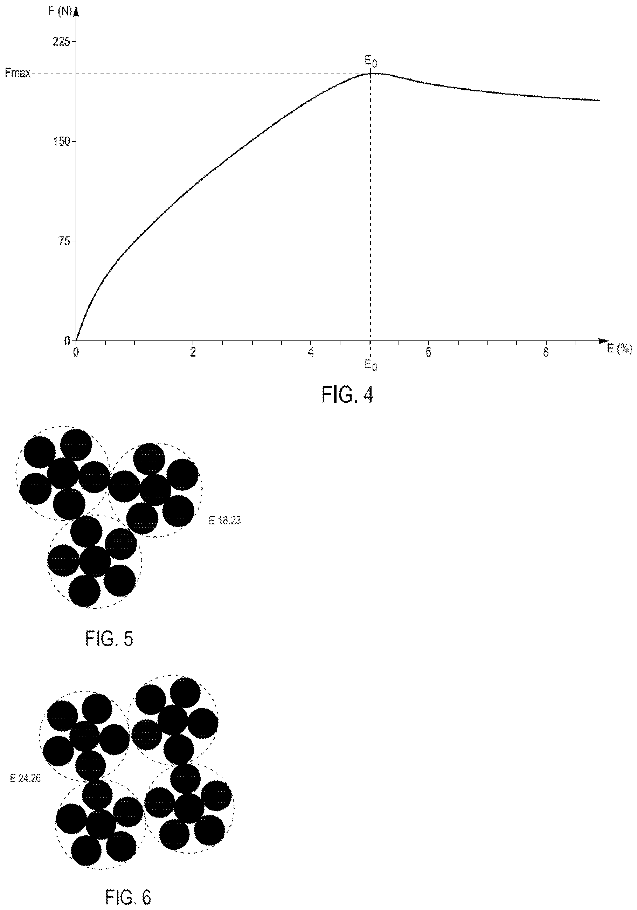

La figure 4 est un exemple-type de courbe force de compression-déformation en compression d'un renfort métallique élastique selon l'invention, représentant son comportement élastique en compression. La force de compression F est exprimée en N et la déformation en compression est un écrasement relatif, exprimé en %. Cette loi de comportement en compression, déterminée sur une éprouvette en mélange élastomérique ayant un module d'élasticité en extension sécant à 10% d'allongement MA10 égal à 6 MPa, présente un maximum correspondant à l'apparition du flambage en compression du renfort. Ce maximum est atteint pour une force de compression maximale Fmax, ou force critique de flambage, correspondant à une déformation critique de flambage E0. Au-delà du point de flambage, la force de compression appliquée diminue alors que la déformation continue à augmenter. Selon l'invention, la déformation critique de flambage en compression E0 est au moins égal à 3%.

Les figures 5 et 6 présentent deux exemples de structures d'assemblage de renforts élastiques multi-torons, modes de réalisation particuliers de l'invention. La figure 5 représente un câble multi-torons de type E18.23 ayant une structure 3^{∗}(1+5)^{∗}0.23, c'est-à-dire comprenant une unique couche de 3 torons, chaque toron comprenant une couche interne de 1 fil interne enroulé en hélice et une couche externe de 5 fils externes enroulés en hélice autour de la couche interne. Chaque fil est en acier et a un diamètre unitaire égal à 0.23 mm. La figure 6 représente un câble multi-torons de type E24.26 ayant une structure 4^{∗}(1+5)^{∗}0.26, c'est-à-dire comprenant une unique couche de 4 torons, chaque toron comprenant une couche interne de 1 fil interne enroulé en hélice et une couche externe de 5 fils externes enroulés en hélice autour de la couche interne. Chaque fil est en acier et a un diamètre unitaire égal à 0.26 mm. Ces câbles sont obtenus par retordage.

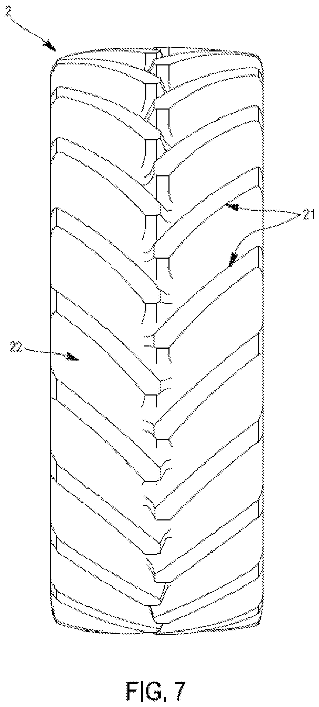

La figure 7 représente une vue de face d'un pneumatique pour véhicule agricole comprenant une bande de roulement à barrettes. Le pneumatique 1 comprend une bande de roulement 2, constituée d'une première et d'une seconde rangées de barrettes 21 s'étendant radialement vers l'extérieur à partir d'une surface portante 22 et disposées en chevrons par rapport au plan équatorial du pneumatique. Comme décrit précédemment, en roulage, ce type de bande de roulement génère des cycles de compression/extension des renforts métalliques des couches de sommet, auxquels résistent mieux des renforts élastiques selon l'invention, avec un grand allongement en extension à faible module et une déformation critique de flambage élevée.

L'invention a été plus particulièrement mise en œuvre pour un pneumatique agricole de dimension 600/70R30 comprenant une armature de sommet avec deux couches de sommet avec des renforts métalliques élastiques de formules E18.23 ou E24.26.

Les caractéristiques géométriques et mécaniques des deux exemples de renforts métalliques élastiques étudiés sont résumées dans le tableau 1 ci-dessous :

**Tableau 1**

| **Type de renforts métalliques** | **Câble multi-torons E18.23** | **Câble multi-torons E24.26** |
|---|---|---|
| Premier module en extension MG1 | 21 GPa | 17 GPa |
| Deuxième module en extension MG2 | 67 GPa | 50 GPa |
| Rapport MG2/MG1 | 3.2 | 2.9 |
| Déformation critique de flambage en compression E0 (%) | 4.5 % | 4.4 % |
| Masse linéique du renfort (g/m) | 6.4 g/m | 10.7 g/m |
| Diamètre du renfort D (mm) | 1.46 mm | 1.92 mm |
| Diamètre de toron DT (mm) | 0.70 mm | 0.80 mm |
| Angle d'hélice AT du toron (°) | 24° | 25.5° |
| Pas d'hélice PT du toron (°) | 8 mm | 6 mm |
| Résistance à rupture R de couche de sommet (N/mm), pour un pas de renforts P en mm | 616 N/mm (P=2.5 mm) | 781 N/mm (P=3mm) |

Les inventeurs ont testé l'invention en comparant la durée de vie, du point de vue de l'endurance de l'armature de sommet, d'un pneumatique de dimension 600/70R30, comprenant deux couches de sommet avec des renforts métalliques élastiques selon l'invention, à celle d'un pneumatique de référence, comprenant six couches de sommet avec des renforts textiles. Un roulage sur sol goudronné, sous couple, avec un effort circonférentiel F_{X} appliqué égal à 520 daN, et à une vitesse V égale à 27 km/h a été effectué pour chaque pneumatique, gonflé à une pression P égale à 50 kPa et soumis à une charge Z égale à 2600 daN.

## Revendications

1. Pneumatique (1) pour véhicule agricole, comprenant:
- une armature de sommet (3), radialement intérieure à une bande de roulement (2) et radialement extérieure à une armature de carcasse (4),
- l'armature de sommet (3) comprenant au moins deux couches de sommet (31, 32), comprenant chacune des renforts métalliques enrobés dans un matériau élastomérique, parallèles entre eux et formant, avec une direction circonférentielle (XX'), un angle A au moins égal à 10°,
**caractérisé en ce que** tout renfort métallique de couche de sommet (31, 32) a une loi de comportement élastique en extension, dite bi-module, comprenant une première portion ayant un premier module en extension MG1 au plus égal à 30 GPa, et une deuxième portion ayant un deuxième module en extension MG2 au moins égal à 2 fois le premier module en extension MG1, ladite loi de comportement en extension étant déterminée pour un renfort métallique enrobé dans un mélange élastomérique ayant un module d'élasticité en extension à 10% d'allongement MA10 au moins égal à 5 MPa et au plus égal à 15 MPa, ce module d'élasticité en extension est déterminé à partir d'essais de traction réalisés conformément à la norme française NF T 46-002 de septembre 1988 ; **et en ce que** tout renfort métallique de couche de sommet (31, 32) a une loi de comportement en compression, **caractérisée par** une déformation critique de flambage en compression E0 au moins égal à 3%, ladite loi de comportement en compression étant déterminée sur une éprouvette, de dimensions 12 mm de largeur, 21 mm de hauteur et 8 mm d'épaisseur, constituée par un renfort placé en son centre et enrobé par un volume parallélépipédique de mélange élastomérique ayant un module d'élasticité en extension à 10% d'allongement MA10 au moins égal à 5 MPa et au plus égal à 15 MPa ; afin d'établir le comportement en compression, l'éprouvette est comprimée dans le sens de la hauteur. à une vitesse de 3 mm / min jusqu'à une déformation en compression, c'est-à-dire un écrasement de l'éprouvette égale à 10% de sa hauteur initiale, à température ambiante, la force critique de flambage Fc et la déformation critique de flambage E0 correspondante sont atteintes lorsque l'effort appliqué diminue alors que la déformation continue à augmenter.

2. Pneumatique (1) selon la revendication 1, l'armature de sommet (3) étant constituée par deux couches de sommet (31, 32) et tout renfort métallique de couche de sommet (31, 32) ayant une masse linéique exprimée en g/m, **dans lequel** la masse linéique d'un renfort métallique de couche de sommet (31, 32) est au moins égale à 6 g/m et au plus égale à 13 g/m.

3. Pneumatique (1) selon l'une des revendications 1 ou 2, **dans lequel** tout renfort métallique de couche de sommet (31, 32) est un câble multi-toron de structure 1×N comprenant une unique couche de N torons de diamètre DT enroulés en hélice ayant un angle AT et un rayon de courbure RT, chaque toron comprenant une couche interne de M fils internes enroulés en hélice et une couche externe de P fils externes enroulés en hélice autour de la couche interne.

4. Pneumatique (1) selon la revendication 3, **dans lequel** l'angle d'hélice AT d'un toron est au moins égal à 20° et au plus égal à 30°.

5. Pneumatique (1) selon l'une quelconque des revendications 3 ou 4, l'armature de sommet (3) étant constituée par deux couches de sommet (31, 32) et tout renfort métallique de couche de sommet (31, 32) ayant un diamètre D, **dans lequel** le diamètre D d'un renfort métallique de couche de sommet (31, 32) est au moins égal à 1.4 mm et au plus égal à 3 mm.

6. Pneumatique (1) selon l'une quelconque des revendications 1 à 5, l'armature de sommet (3) étant constituée par deux couches de sommet (31, 32) et une couche de sommet (31, 32) ayant une résistance à rupture R exprimée en N/mm, **dans lequel** la résistance à rupture R d'une couche de sommet (31, 32) est au moins égale à 500 N/mm et au plus égale à 1500 N/mm.

7. Pneumatique (1) selon l'une quelconque des revendications 1 à 6, **dans lequel** l'armature de sommet (3) comprend au moins une couche de frettage (33) comprenant des renforts enrobés dans un matériau élastomérique, parallèles entre eux et formant, avec la direction circonférentielle (XX'), un angle B au plus égal à 10°.

8. Pneumatique (1) selon l'une quelconque des revendications 1 à 7, **dans lequel** l'armature de sommet (3) comprend au moins une couche de sommet additionnelle comprenant des renforts métalliques enrobés dans un matériau élastomérique, parallèles entre eux et formant, avec la direction circonférentielle (XX'), un angle C au moins égal à 60° et au plus égal à 90°.

9. Pneumatique (1) selon l'une quelconque des revendications 1 à 8, **dans lequel** l'armature de carcasse (4) comprend au moins une couche de carcasse (41) comprenant des renforts textiles enrobés dans un matériau élastomérique, parallèles entre eux et formant, avec la direction circonférentielle (XX'), un angle D au moins égal à 85° et au plus égal à 95°.

10. Pneumatique (1) selon l'une quelconque des revendications 1 à 9, **dans lequel** la bande de roulement (2) est constituée d'une première et d'une seconde rangées de barrettes (21) s'étendant radialement vers l'extérieur à partir d'une surface portante (22) et disposées en chevrons par rapport au plan équatorial (XZ) du pneumatique.

## Patentansprüche

1. Reifen (1) für ein landwirtschaftliches Fahrzeug, umfassend:
- eine Scheitelbewehrung (3), die sich radial innerhalb eines Laufstreifens (2) und radial außerhalb einer Karkassenbewehrung (4) befindet,
- wobei die Scheitelbewehrung (3) mindestens zwei Scheitelschichten (31, 32) umfasst, die jeweils Metallverstärkungen umfassen, die in ein Elastomermaterial eingebettet sind, parallel zueinander verlaufen und mit einer Umfangsrichtung (XX') einen Winkel A von mindestens 10° bilden,
**dadurch gekennzeichnet, dass** jede Metallverstärkung der Scheitelschicht (31, 32) ein sogenanntes bimodulares elastisches Dehnungsverhaltensgesetz aufweist, das einen ersten Teil mit einem ersten Dehnungsmodul MG1 von höchstens 30 GPa und einen zweiten Teil mit einem zweiten Dehnungsmodul MG2 von mindestens dem Zweifachen des ersten Dehnungsmoduls MG1 umfasst,
wobei das Dehnungsverhaltensgesetz für eine Metallverstärkung bestimmt wird, die in eine Elastomermischung eingebettet ist, die einen Dehnungselastizitätsmodul bei 10 % Dehnung MA10 von mindestens 5 MPa und höchstens 15 MPa aufweist,
wobei dieser Dehnungselastizitätsmodul anhand von Zugversuchen bestimmt wird, die gemäß der französischen Norm NF T46-002 vom September 1988 durchgeführt werden; und dadurch, dass jede Metallverstärkung der Scheitelschicht (31, 32) ein Kompressionsverhaltensgesetz aufweist, das durch eine kritische Knickverformung E0 von mindestens 3 % gekennzeichnet ist, wobei das Kompressionsverhaltensgesetz an einem Prüfstück mit den Abmessungen 12 mm Breite, 21 mm Höhe und 8 mm Dicke bestimmt wird, das eine in der Mitte angeordnete Verstärkung aufweist, die in ein quaderförmiges Volumen einer Elastomermischung mit einem Dehnungselastizitätsmodul bei 10 % Dehnung MA10 von mindestens 5 MPa und höchstens 15 MPa eingebettet ist; wobei das Prüfstück zur Bestimmung des Kompressionsverhaltens in Höhenrichtung mit einer Geschwindigkeit von 3 mm/min komprimiert wird, bis eine Kompressionsverformung, d. h. eine Stauchung des Prüfstücks, von 10 % seiner ursprünglichen Höhe bei Umgebungstemperatur erreicht ist, wobei die kritische Knickkraft Fc und die entsprechende kritische Knickverformung E0 erreicht sind, wenn die aufgebrachte Kraft abnimmt, während die Verformung weiter zunimmt.

2. Reifen (1) nach Anspruch 1, wobei die Scheitelbewehrung (3) aus zwei Scheitelschichten (31, 32) gebildet ist und jede Metallverstärkung der Scheitelschicht (31, 32) eine in g/m ausgedrückte lineare Masse aufweist, wobei die lineare Masse einer Metallverstärkung der Scheitelschicht (31, 32) mindestens 6 g/m und höchstens 13 g/m beträgt.

3. Reifen (1) nach einem der Ansprüche 1 oder 2, wobei jede Metallverstärkung der Scheitelschicht (31, 32) ein Mehrlitzenseil mit der Struktur 1×N ist, das eine einzige Lage aus N Litzen mit einem Durchmesser DT umfasst, die schraubenförmig mit einem Winkel AT und einem Krümmungsradius RT gewickelt sind, wobei jede Litze eine innere Lage aus M schraubenförmig gewickelten inneren Drähten und eine äußere Lage aus P schraubenförmig um die innere Lage gewickelten äußeren Drähten umfasst.

4. Reifen (1) nach Anspruch 3, wobei der Schraubenwinkel AT einer Litze mindestens 20° und höchstens 30° beträgt.

5. Reifen (1) nach einem der Ansprüche 3 oder 4, wobei die Scheitelbewehrung (3) aus zwei Scheitelschichten (31, 32) gebildet ist und jede Metallverstärkung der Scheitelschicht (31, 32) einen Durchmesser D aufweist, wobei der Durchmesser D einer Metallverstärkung der Scheitelschicht (31, 32) mindestens 1,4 mm und höchstens 3 mm beträgt.

6. Reifen (1) nach einem der Ansprüche 1 bis 5, wobei die Scheitelbewehrung (3) aus zwei Scheitelschichten (31, 32) gebildet ist und eine Scheitelschicht (31, 32) eine in N/mm ausgedrückte Bruchfestigkeit R aufweist, wobei die Bruchfestigkeit R einer Scheitelschicht (31, 32) mindestens 500 N/mm und höchstens 1.500 N/mm beträgt.

7. Reifen (1) nach einem der Ansprüche 1 bis 6, wobei die Scheitelbewehrung (3) mindestens eine Schrumpfschicht (33) umfasst, die Verstärkungen umfasst, die in ein Elastomermaterial eingebettet sind, parallel zueinander verlaufen und mit der Umfangsrichtung (XX') einen Winkel B von höchstens 10° bilden.

8. Reifen (1) nach einem der Ansprüche 1 bis 7, wobei die Scheitelbewehrung (3) mindestens eine zusätzliche Scheitelschicht umfasst, die Metallverstärkungen umfasst, die in ein Elastomermaterial eingebettet sind, parallel zueinander verlaufen und mit der Umfangsrichtung (XX') einen Winkel von mindestens 60° und höchstens 90° bilden.

9. Reifen (1) nach einem der Ansprüche 1 bis 8, wobei die Karkassenbewehrung (4) mindestens eine Karkassenschicht (41) umfasst, die textile Verstärkungen umfasst, die in ein Elastomermaterial eingebettet sind, parallel zueinander verlaufen und mit der Umfangsrichtung (XX') einen Winkel D von mindestens 85° und höchstens 95° bilden.

10. Reifen (1) nach einem der Ansprüche 1 bis 9, wobei der Laufstreifen (2) aus einer ersten und einer zweiten Reihe von Stollen (21) gebildet ist, die sich von einer Tragfläche (22) radial nach außen erstrecken und in Bezug auf die Äquatorialebene (XZ) des Reifens in einem Fischgrätenmuster angeordnet sind.

## Claims

1. Tyre (1) for an agricultural vehicle, comprising:
- a crown reinforcement (3), radially on the inside of a tread (2) and radially on the outside of a carcass reinforcement (4),
- the crown reinforcement (3) comprising at least two crown layers (31, 32) each comprising metal reinforcers which are coated in an elastomeric material, are mutually parallel and form an angle A at least equal to 10° with a circumferential direction (XX'),
**characterized in that** any metal reinforcer of a crown layer (31, 32) has a law, known as a bi-modulus law, governing its elastic behaviour under tension, and comprising a first portion having a first extension modulus MG1 at most equal to 30 GPa, and a second portion having a second extension modulus MG2 at least equal to 2 times the first extension modulus MG1, said law governing the tensile behaviour being determined for a metal reinforcer coated in an elastomer compound having a tensile elastic modulus at 10% elongation, MA10, at least equal to 5 MPa and at most equal to 15 MPa, this tensile elastic modulus being determined from tensile testing performed in accordance with French Standard NF T 46-002 of September 1988, **and in that** any metal reinforcer of a crown layer (31, 32) has a law governing its behaviour under compression that is **characterized by** a critical buckling strain E0 at least equal to 3%, said law governing behaviour under compression being determined on a test specimen measuring 12 mm wide, 21 mm high and 8 mm thick, made up of a reinforcer placed at its centre and coated with a parallelepipedal volume of an elastomer compound having a tensile elastic modulus at 10% elongation, MA10, at least equal to 5 MPa and at most equal to 15 MPa, in order to determine the law governing the behaviour in compression, the test specimen being compressed in the heightwise direction, at a rate of 3 mm/min until compressive deformation is achieved, namely until the test specimen is compressed by an amount equal to 10% of its initial height, at ambient temperature, the critical buckling force Fc and the corresponding critical buckling strain E0 being reached when the applied force decreases while the strain continues to increase.

2. Tyre (1) according to Claim 1, the crown reinforcement (3) being made up of two crown layers (31, 32) and any metal reinforcer of a crown layer (31, 32) having a linear density, expressed in g/m, **wherein** the linear density of a metal reinforcer of a crown layer (31, 32) is at least equal to 6 g/m and at most equal to 13 g/m.

3. Tyre (1) according to either of Claims 1 and 2, **wherein** any metal reinforcer of a crown layer (31, 32) is a multistrand rope of structure 1×N comprising a single layer of N strands of diameter DT wound in a helix at an angle AT and a radius of curvature RT, each strand comprising an internal layer of M internal threads wound in a helix and an external layer of P external threads wound in a helix around the internal layer.

4. Tyre (1) according to Claim 3, **wherein** the helix angle AT of a strand is at least equal to 20° and at most equal to 30°.

5. Tyre (1) according to either one of Claims 3 and 4, the crown reinforcement (3) being made up of two crown layers (31, 32) and any metal reinforcer of a crown layer (31, 32) having a diameter D, **wherein** the diameter D of a metal reinforcer of a crown layer (31, 32) is at least equal to 1.4 mm and at most equal to 3 mm.

6. Tyre (1) according to any one of Claims 1 to 5, the crown reinforcement (3) being made up of two crown layers (31, 32) and a crown layer (31, 32) having a breaking strength R expressed in N/mm, **wherein** the breaking strength R of a crown layer (31, 32) is at least equal to 500 N/mm and at most equal to 1500 N/mm.

7. Tyre (1) according to any one of Claims 1 to 6, **wherein** the crown reinforcement (3) comprises at least one hooping layer (33) comprising reinforcers which are coated in an elastomeric material, are mutually parallel and form an angle B at most equal to 10° with the circumferential direction (XX').

8. Tyre (1) according to any one of Claims 1 to 7, **wherein** the crown reinforcement (3) comprises at least one additional crown layer comprising metal reinforcers which are coated in an elastomeric material, are mutually parallel and form an angle C at least equal to 60° and at most equal to 90° with the circumferential direction (XX').

9. Tyre (1) according to any one of Claims 1 to 8, **wherein** the carcass reinforcement (4) comprises at least one carcass layer (41) comprising textile reinforcers which are coated in an elastomeric material, are mutually parallel and form an angle D at least equal to 85° and at most equal to 95° with the circumferential direction (XX').

10. Tyre (1) according to any one of Claims 1 to 9, **wherein** the tread (2) is made up of a first and a second row of lugs (21) extending radially outwards from a bearing surface (22) and disposed in a chevron pattern with respect to the equatorial plane (XZ) of the tyre.
